# EUROPEAN PATENT SPECIFICATION

(11) **EP 3 319 490 B1**
(45) Date of publication and mention of the grant of the patent: **20.03.2019**
(21) Application number: 16732627.1
(22) Date of filing: 28.06.2016
(51) Int. Cl.: A47J 27/04, A47J 27/08, A23L 5/10, A47J 27/16

(54) **A PRESSURE COOKING DEVICE**
DRUCKKOCHVORRICHTUNG
APPAREIL DE CUISSON SOUS PRESSION

(30) Priority: 07.07.2015 EP 15175668
(43) Date of publication of application: 16.05.2018
(73) Proprietor: Koninklijke Philips N.V., 5656 AE Eindhoven (NL)
(72) Inventor: VAN DILLEN, Tiemen, 5656 AE Eindhoven (NL)
(74) Representative: de Vries, Janna
(86) International application number: PCT/EP2016/064932
(87) International publication number: WO 2017/005533

(56) References cited:
- EP-A1- 1 757 861
- EP-A1- 2 606 776
- WO-A2-2009/016566
- US-A- 4 426 923
- US-A- 4 649 898
- US-A1- 2003 051 606

## Description

### FIELD OF THE INVENTION

The present invention generally relates to food cooking within a pressurized environment, and particularly, to a device and method for pressure cooking.

### BACKGROUND OF THE INVENTION

WO 2009/016566 A2 discloses a device for cooking food such as rice to perform a cooking process by heating the food under the influence of boiling water during a period of time. The device comprises a controlling means for controlling an operation of the device, which are adapted to operate components of the device in such a way that a total quantity of water to be used in the cooking process is gradually supplied to the food. The supply of a major portion of the total quantity of the water is performed when the cooking process is already taking place.

US 4649898 A discloses an apparatus for controlling the level of steam condensate in a steam retort wherein sealed cans of food are exposed to incoming steam. The apparatus comprises a pneumatically actuated condensate drain valve which is controlled by a solenoid valve and opens to drain condensate if it reaches a dangerously high level, an alarm to indicate when the high level is reached, a recorder to provide a continuous permanent record of condensate level and drain valve status, and an electric control system for sensing condensate level and operating the solenoid valve, the alarm and the recorder in accordance therewith. The electric control system includes a condensate level sensor in the form of a one or more float-operated magnetically-responsive reed switches mounted in the retort. The sensor comprises a hollow stem in which a reed switch is potted in elastomeric non-displaceable material. In one embodiment the control system employs two reed switches and two relays and the drain valve opens when the condensate reaches an upper level and closes when it reaches a lower level. In another embodiment the control system employs one reed switch and a time-delay relay to prevent the drain valve from opening unless the condensate level remains high for a certain length of time.

US 2003/051606 A1 discloses an apparatus for cooking food comprising a cooking chamber configured to heat food utilizing steam, the chamber having a top opening configured to permit food to enter the chamber, a bottom opening configured to permit food and water to exit the chamber, means for introducing water into the cooking chamber, inlet means for introducing steam into the cooking chamber, outlet means for permitting the steam to exit the cooking chamber, and means for measuring pressure within the cooking chamber; a means for selectively opening and closing the top opening of the cooking chamber and means for selectively opening and closing the bottom opening of the cooking chamber; a steam generator; a means for providing water to the steam generator; a conduit for connecting the cooking chamber to the steam generator; and a regulator for regulating the water into the cooking chamber and the steam generator. EP2606776A1 also discloses a pressure cooking device.

Pressure cooking has been well known and widely applied around the world. Many pressure cookers have been developed to perform pressure cooking. In a typical pressure cooking process, food materials are placed inside a sealed vessel with an amount of water or other water-based cooking liquid such as milk. A heating source (like an electric heater) is arranged to heat the sealed environment. Pressure is created and increased by boiling the liquid and by the trapped steam. The food materials are either cooked in the liquid or in the steam.

Under pressure, the temperature of the liquid and the saturated steam could be much higher than at atmospheric pressure. Therefore, pressure cooking enables food materials to be cooked very fast. In home cooking, pressure cooking is used to simulate the cooking effects of long braising or simmering. In addition, since the time consumption can be reduced, energy can be saved and more vitamins can be preserved.

### SUMMARY OF THE INVENTION

These known pressure cookers have several disadvantages. One important disadvantage is that they need a long time to build up or release pressure in the sealed vessel. Since water-based liquid is used to generate steam, the water must be boiled first. In a typical cooking process with a pressure cooker, it takes several minutes to boil the water of room temperature used by the consumers, to generate enough steam and finally reach the desired temperature and pressure.

When releasing pressure, the problem is even more serious. The internal pressure in the sealed vessel is higher than the atmospheric pressure. Therefore, before opening the sealed cooking vessel, the pressure should be released to atmospheric pressure first to ensure safety. However, with the pressure release, the evaporation temperature of water becomes lower and water of higher temperature is no longer possible. To cool down the water, a large amount of new steam is generated, which will act as a negative feedback and significantly slow down the pressure release process. Therefore, from 1.5 Bar and 130 °C to atmospheric pressure and 100 °C, the whole pressure release process can take up 10-15 minutes.

Since it takes such a long time to release the pressure, the cooking process cannot be controlled accurately. After heating is stopped, the food materials still stay in the cooking environment of high temperature and high pressure for a period of time before they are taken out, and in most pressure cooking devices the pressure release process cannot be controlled accurately.

Furthermore, since the cooking vessel cannot be opened, it is impossible to monitor or adjust the cooking process. During cooking, the cook has no access to the food materials to check their status or to add some ingredients. Everything should be ready before cooking starts.

There have already been some attempts to reduce the time necessary for releasing pressure. For example, some special pressure release elements are included to help the pressure release. Some pressure cookers also allow the users to accelerate the cooling process with cool tap water. However, the results are not satisfactory.

Another disadvantage of known pressure cookers is that the humidity in the cooking chamber cannot be adjusted conveniently. Therefore, only a limited number of cooking methods can be performed. Usually, a pressure cooker has a wet cooking environment because of the existence of a large amount of liquid water. This restricts the potential applications of pressure cooking.

In view of the foregoing, there is a need in the art for a solution capable of reducing the time necessary for releasing the pressure in a pressure cooking device, and adjusting the humidity conveniently. The invention is defined by the independent claims. The dependent claims define advantageous embodiments.

One aspect of the invention provides a pressure cooking device comprising: a sealed cooking chamber arranged to accommodate food materials within a pressurized environment, the sealed cooking chamber having a seal cover seal an internal cooking space in the sealed cooking chamber and allowing a pressure to be built up therein; a steam supplying unit arranged to supply steam to the sealed cooking chamber; and a steam channel arranged to interconnect the steam supplying unit and the sealed cooking chamber; wherein the pressure cooking device further comprises a control unit adapted to control the cooking process based on the liquid water content and/or the humidity in the sealed cooking chamber.

In the above solution, the liquid water content and/or the humidity in the sealed cooking chamber could be controlled by adjusting the cooking process. Therefore, for example, before opening the cooking chamber, there could be only a small amount of liquid water remaining in the cooking chamber. As a result, the pressure can be released very quickly. Furthermore, the cook can pause the cooking process and have access to the food materials easily. This provides more freedom to monitor and adjust the cooking process.

The pressure cooking device further comprises a first heater adapted to heat the sealed cooking chamber under the control of the control unit based on the liquid water content and/or the humidity in the sealed cooking chamber. This heater can achieve two functions: first, it can maintain the temperature in the sealed cooking chamber and of the cooking vessel above the dew point temperature of the steam contained, to prevent the steam from condensing into water liquid content. Second, if some liquid water content already exists, the heater can heat it to cause it to evaporate so as to limit, reduce or eliminate the liquid water content in the sealed cooking chamber.

The pressure cooking device could also comprises a cooling element adapted to cool down the sealed cooking chamber under the control of the control unit based on the liquid water content and/or the humidity in the sealed cooking chamber. It can be used to enhance the humidity or even form some liquid water in the cooking chamber. This feature is useful to enlarge the application scope of the pressure cooking device.

In an alternative embodiment, the steam supplying unit comprises a heating element adapted to adjust the status of the steam introduced into the cooking chamber under the control of the control unit based on the liquid water content and/or the humidity in the sealed cooking chamber. This provides another detailed solution for controlling the liquid water content and/or the humidity in the sealed cooking chamber. For example, if the consumer wants to increase the humidity or have more liquid water, saturated steam can be supplied. In an opposite situation, super-heated steam can be supplied.

Another detailed solution is one in which the pressure cooking device further comprises a drainage channel adapted to drain out the accumulated liquid water under the control of the control unit based on the liquid water content in the sealed cooking chamber. In a preferable embodiment, a buffer space is arranged in the middle of the drainage channel to prevent the consumer from being injured by a steam jet.

During cooking, one option is to set the temperature in the sealed cooking chamber above the dew point temperature of the steam contained. This could prevent condensation of the steam, so that the amount of liquid water could be limited.

The pressure cooking device could further comprise a sensing unit adapted to indicate the amount of liquid water content and/or the humidity in the sealed cooking chamber. By analyzing the feedbacks from the sensing unit, the control unit can figure out the gap between the desired targets and the sensed results. Accordingly, the control unit can determine the suitable control orders to eliminate the gap.

To provide steam for cooking, the steam supplying unit could comprise a connection to an independent steam source or an embedded steam generation element. In either case, a steam storage chamber could be a preferable option, which can provide a buffer for a more stable steam supply.

The pressure cooking device may also comprise a valve arranged in the steam channel to control the supply of steam. By virtue of this arrangement, the steam supply can be cut off or restarted very quickly. Especially in the case that the steam source has been preheated, this valve can help to re-build the internal pressure very quickly after the pressure has been released.

In an alternative embodiment, the pressure cooking device may further comprise:
a second sealed cooking chamber for accommodating food materials;
a steam switch arranged to switch the supply of steam from the steam supplying unit to the sealed cooking chamber and/or the second sealed cooking chamber.

By virtue of this arrangement, two kinds of food could be cooked simultaneously. Or, in another situation, the cook can prepare for the second cooking process while the first one is performed. This can save more cooking time.

According to another aspect, this invention also provides a cooking method which consists in using a pressure cooking device comprising a sealed cooking chamber arranged to accommodate food materials within a pressurized environment, the sealed cooking chamber having a seal cover seal an internal cooking space in the sealed cooking chamber and allowing a pressure to be built up therein; a steam supplying unit arranged to supply steam to the sealed cooking chamber; and a steam channel arranged to interconnect the steam supplying unit and the sealed cooking chamber. The cooking method comprises: supplying steam from the steam supplying unit to the sealed cooking chamber; sensing the humidity and/or the liquid water content in the sealed cooking chamber; wherein the cooking process, including heating or cooling the sealed cooking chamber (20), is controlled based on the humidity and/or the liquid water content in the sealed cooking chamber.

Other features and advantages of embodiments of the present invention will also be understood from the following description of exemplary embodiments when read in conjunction with the accompanying drawings, which illustrate, by way of example, spirit and principles of the present invention.

### BRIEF DESCRIPTION OF THE DRAWINGS

Examples of the invention will now be described in detail with reference to the accompanying drawings, in which:
Fig. 1 shows a first example of a pressure cooking device according to the invention in a schematic view;
Fig. 2 shows a second example of a pressure cooking device according to the invention in a schematic view.

### DETAILED DESCRIPTION OF THE EMBODIMENTS

The present invention will now be discussed with reference to several example embodiments. It should be understood that these embodiments are discussed only for the purpose of enabling those skilled in the art to better understand and thus implement the subject matter described herein, rather than suggesting any limitation on the scope of the subject matter.

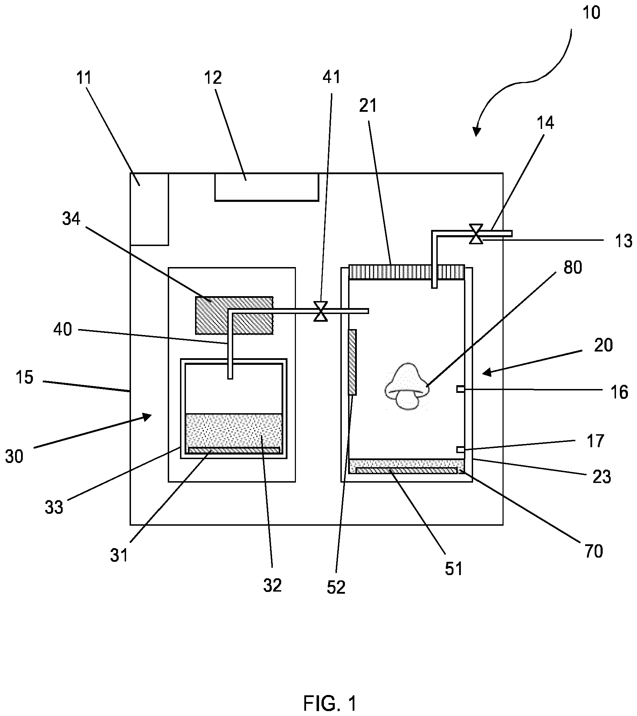

Fig. 1 shows a first example of a pressure cooking device according to the invention in a schematic view. The pressure cooking device 10 comprises a sealed cooking chamber 20, a steam supplying unit 30 and a steam channel 40, which are all contained in a housing 15.

The sealed cooking chamber 20 comprises a cooking vessel 23 and a seal cover 21 attachable to the cooking vessel 23. When the seal cover 21 is open, the internal cooking space of the cooking vessel 23 is exposed and food materials 80 could be placed in or taken out of said space. When the seal cover 21 is closed, the internal cooking space is sealed and a pressure could be built up therein.

On the bottom of the sealed cooking vessel 23, a first heater 51 is arranged by which the internal cooking space of the sealed cooking chamber 20 could be heated. This could maintain the internal temperature at a desired level so as to prevent condensation of the steam supplied by the steam supplying unit 30. Meanwhile, if there already is some liquid water content in the sealed cooking chamber 20, irrespective of whether it is in the form of water droplets in the steam or accumulated liquid water on the surface of food materials 80 or on the bottom of the cooking vessel 23, the first heater 51 can heat it to cause evaporation thereof. By virtue of this method, the amount of the liquid water content in the sealed cooking chamber 20 could be limited or reduced to a desired amount, or even eliminated at all. Thus, when the user wants to release the pressure and opens the seal cover 21, only a limited amount of water must be cooled down first, which means the amount of new generated steam could be limited, too. As a result, the pressure release process will be much shorter.

A cooling element 52 is arranged to cool down the steam in the cooking vessel 23 to cause condensation thereof. In some cooking processes, a certain humidity or more liquid water is needed to obtain a desired texture of food. This cooling element 52 can be used to increase the humidity or form liquid water 70. In one embodiment, a water filler can be used, which can also be considered as a cooling element.

According to this embodiment, the steam supplying unit 30 supplies steam through the steam channel 40 to the cooking chamber 20. A boiler 33 is arranged to receive water 32 and a second heater 31 is used to heat the water 32 into steam. After leaving the boiler 33, the steam is further heated by a third heater 34 around the steam channel 40 and its status (temperature, pressure) can be adjusted. A valve 41 is arranged in the steam channel 40 to control the steam supply.

According to different cooking needs, saturated steam or super-heated steam can be provided. Super-heated steam has a higher temperature and is dry, so it can be used to "fry" food. Furthermore, since super-heated steam does not contain liquid water , it can be helpful to limit or reduce the total amount of the liquid water content in the sealed cooking chamber 20. In another aspect, saturated steam is wet and in many embodiments is suitable for cooking. When contacting food materials 80 and the inner surface of the cooking chamber 20, condensation happens and a lot of latent heat is given out. The condensed water can be used to adjust the total liquid water content in the cooking chamber 20 and the latent heat can accelerate the cooking process.

In this embodiment, a control unit 11 is used to control the first heater 51, the cooling element 52, the second heater 31 and the third heater 34 so as to adjust the total amount of the liquid water content and/or the humidity. To monitor the liquid water amount and the humidity in the cooking chamber 20, a water level sensor 17 and a hygrometer 16 can be arranged on the side wall of the cooking vessel 23. The control unit 11 can compare the targets with the sensing results and modify the control orders to the first heater 51, the cooling element 52, the second heater 31 and the third heater 34. The heating or cooling power and/or the characteristics of the steam supply can be adjusted accordingly. This adjustment can be controlled according to a cooking process pre-input by a user or from a remote server.

A release channel 14 and a release valve 13 are arranged to release the pressure in the sealed cooking chamber 20. The control unit 11 can also control the valve 13. Combining this with control of the first heater 51, the cooling element 52, the second heater 31 and the third heater 34, the liquid water amount and the humidity can be adjusted more conveniently (to be explained below). When an accident happens, the valve 13 can also be opened to release the over-pressure.

The pressure cooking device 10 further comprises a user interface 12, through which the cook can input a recipe. This recipe will be sent to the control unit 11 and the control unit 11 will decide about the suitable cooking process and relevant cooking parameters (like temperature, time, target amount of water liquid content) by visiting an embedded database or a remote server. The cook can also adjust the cooking parameters intentionally through the user interface 12.

Before the cooking starts, the user may first start pressure cooking device 10 to pre-heat the steam supplying unit 30 through the user interface 12. In this status, the valve 41 is closed so the steam supply through the steam channel 40 is cut off. The control unit 11 controls the second heater 31 to pre-heat the water 32 and keep it at the desired temperature.

After the pre-heating step is completed, the user interface 12 may give a feedback to remind the user about it. Now food materials 80 can be placed in the cooking vessel 23, and then the user can close the seal cover 21 to form the sealed cooking chamber 20. Please note that in this embodiment no water is intentionally filled in, although it is possible for the food materials 80 to carry some water for example from washing. Compared with the cooking environment in the pressure cooker according to the prior art, the sealed cooking chamber 20 can be considered to be in a relatively dry state.

When the cooking starts, the valve 14 is closed and the valve 41 is opened by the control unit 11. Meanwhile, the control unit 11 controls the second heater 31 and the third heater 34 to generate any steam needed. In the beginning, the temperature of the cooking space and the food materials 80 in the sealed cooking chamber 20 is low, so some introduced steam will condense into liquid water content. However, with the continuous supply of steam, the cooking space and the food materials 80 in the sealed cooking chamber 20 are heated up quickly and the necessary pressure is built up.

During the whole cooking process, the hygrometer 16 and the water level sensor 17 are used to monitor the humidity and the amount of liquid water 70 in the sealed cooking chamber 20. Irrespective of the form of the liquid water content in the sealed cooking chamber 20 (water droplets in the cooking space, accumulated liquid water on the bottom of the cooking vessel 23 or on the surface of the food materials), if the results from the hygrometer 16 and the water level sensor 17 show that the cooking status is different from the desired status, the control unit 11 will modify the control orders to the first heater 51, the cooling element 52, the second heater 31 and the third heater 34 to get it back on track. Meanwhile, the control unit 11 will also control the opening or closing of the valve 14 and/or valve 41 in order to adjust the cooking pressure or release excess steam. For example, when the liquid water exceeds the desired amount, the control unit 11 may close the valve 41 and open the valve 14, and meanwhile, the heater 51 heats the liquid water 70 to cause it to evaporate. The generated steam will be released through the valve 14, so the amount of liquid water 70 is reduced. Another option consists in supplying super-heated steam to the cooking chamber 20. The super-heated steam is dry, and can cause evaporation of the liquid water content already in the cooking chamber 20. By virtue of these methods, the liquid water content in the sealed cooking chamber 20 can be adjusted, limited, reduced or even eliminated.

When the user wants to open the sealed cooking chamber 20, either to add some ingredients or to see the cooking results or for some other reason, the control unit 11 will first close the valve 41 to cut off the supply of steam, and meanwhile adjusts the second heater 31 and the third heater 34 to the pre-heating status. Then, the control unit 11 will open the valve 14 to release pressure. When there is only a small amount of liquid water content in the cooking chamber, the pressure release can be completed in a very short time (in some embodiments only 10-15s are needed). Compared with several minutes in the prior arts, the time is significantly shortened. In addition, since the steam supplying unit 30 is kept in the pre-heating status, if desired by the user the pressure can be built up quickly, too. This provides more freedom to monitor and adjust the cooking process.

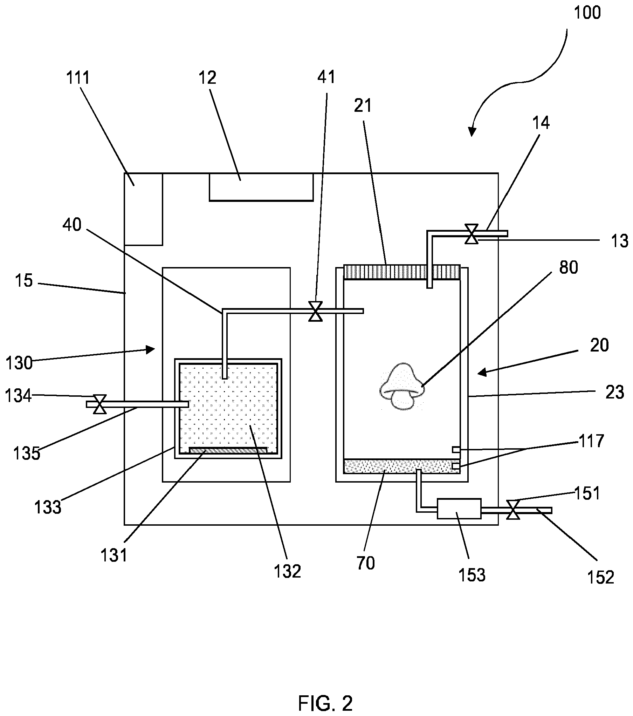

Fig. 2 shows a second example of pressure cooking device 100 according to the invention in a schematic view. Compared with the previously described pressure cooking device 10, many elements, like the sealed cooking chamber 20, steam channel 40, housing 15, user interface 12, release channel 14 and a release valve 13 are the same.

Some other elements are different. In this embodiment, the steam supplying unit 130 can be coupled to an independent steam supplier (not shown) through a channel 135, and a valve 134 is arranged to control the steam supply. In the pre-heating stage, the valve 134 is opened but the valve 41 is kept closed . The introduced steam 132 will stay in a steam storage chamber 133 and will be kept in the desired pre-heating condition (temperature, pressure) by a heater 131. Later, when the cooking starts, valve 41 will be opened to introduce steam into the sealed cooking chamber 20.

Another difference in this embodiment relates to a pair of water level sensors 117 which are arranged one above the other, as shown in the drawing, to determine two limits for controlling the accumulated liquid water amount in the cooking chamber 20. A drain channel 152 is arranged at the bottom of the cooking vessel 23 together with a valve 151 controlled by the control unit 111. During cooking, the control unit 111 can control the heater 131, the valve 41 and the valve 14 so that the humidity and the amount of the liquid water content can be adjusted. However, if liquid water 70 reaches the higher sensor, the control unit 111 will open the valve 151 to drain out excess liquid water. To ensure safety, a buffer space 153 could be used for cooling down the drained out liquid water before it is drained into the atmosphere. When the water level decreases to the lower sensor, the drain will be stopped in order to ensure the internal pressure will not be released unwantedly.

Similar to the previous embodiment, this pressure cooking device 100 could limit the liquid water content within a desired range. When the user wants to release the pressure, only a limited amount of new steam is generated. Therefore, the pressure release can be completed in a shorter time compared to the prior pressure cooker. In addition, since the steam supplying unit 130 is kept in the pre-heating status, if necessary the pressure can be built up again quickly.

Various modifications, adaptations to the foregoing exemplary embodiments of this invention within the scope of the claims may become apparent to those skilled in the relevant arts in view of the foregoing description, when read in conjunction with the accompanying drawings. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A pressure cooking device (10, 100) comprising:
a sealed cooking chamber (20) arranged to accommodate food materials (80) within a pressurized environment, the sealed cooking chamber (20) having a seal cover (21) to seal an internal cooking space in the sealed cooking chamber (20) and allowing a pressure to be built up therein;
a steam supplying unit (30, 130) arranged to supply steam to the sealed cooking chamber (20); and
a steam channel (40) arranged to interconnect the steam supplying unit (30, 130) and the sealed cooking chamber (20);
**characterized in that** the pressure cooking device (10, 100) further comprises
a heater (51) adapted to heat the sealed cooking chamber (20),
a cooling element (52) adapted to cool down the sealed cooking chamber (20), and
a control unit (11, 111) adapted to control the cooking process, including heating or cooling the sealed cooking chamber (20), based on the liquid water content and/or the humidity in the sealed cooking chamber (20).

2. The pressure cooking device (10, 100) according to claim 1, wherein the cooling element (52) comprises a water filler adapted to fill liquid water into the sealed cooking chamber (20) under the control of the control unit (11) based on the liquid water content and/or the humidity in the sealed cooking chamber (20).

3. The pressure cooking device (10, 100) according to claim 1, wherein the steam supplying unit (30, 130) comprises a heating element (31, 34, 131) adapted to adjust the status of the steam introduced into the cooking chamber (20) under the control of the control unit (11) based on the liquid water content and/or the humidity in the sealed cooking chamber (20).

4. The pressure cooking device (10, 100) according to claim 1, which further comprises a drainage channel (152) adapted to drain out the accumulated liquid water under the control of the control unit (11) based on the liquid water content in the sealed cooking chamber (20).

5. The pressure cooking device (10, 100) according to claim 4, wherein a buffer space (153) is arranged in the drainage channel (152).

6. The pressure cooking device (10, 100) according to claim 1, wherein the temperature in the sealed cooking chamber (20) is set above the dew point temperature of the steam contained therein.

7. The pressure cooking device (10, 100) according to claim 1, which further comprises a sensing unit (16, 17, 117) adapted to indicate the amount of liquid water and/or the humidity in the sealed cooking chamber (20).

8. The pressure cooking device (10, 100) according to claim 1, wherein the steam supplying unit (30, 130) comprises a connection (135) to an independent steam source or a steam generation element.

9. The pressure cooking device (10, 100) according to claim 1, which further comprises a valve (41) arranged in the steam channel (40) to control the supply of steam.

10. The pressure cooking device (10, 100) according to claim 9, wherein the steam supplying unit (30, 130) is arranged to pre-heat steam before cooking.

11. The pressure cooking device (10, 100) according to claim 1, further comprising:
a second sealed cooking chamber adapted to accommodate food materials;
a steam switch arranged to switch the supply of steam from the steam supplying unit (30, 130) to the sealed cooking chamber (20) and/or the second sealed cooking chamber.

12. A cooking method with a pressure cooking device (10, 100) comprising a sealed cooking chamber (20) arranged to accommodate food materials (80) within a pressurized environment, the sealed cooking chamber (20) having a seal cover (21) to seal an internal cooking space in the sealed cooking chamber (20) and allowing a pressure to be built up therein; a steam supplying unit (30, 130) arranged to supply steam to the sealed cooking chamber (20); and a steam channel (40) arranged to interconnect the steam supplying unit (30, 130) and the sealed cooking chamber (20);
the cooking method comprising:
- supplying (40) steam from the steam supplying unit (30, 130) to the sealed cooking chamber (20); and
- sensing (16, 17, 117) the humidity and/or the liquid water content in the sealed cooking chamber (20);
**characterized in that** the cooking method further comprises:
- controlling (11, 111) the cooking process, including heating or cooling the sealed cooking chamber (20), based on the humidity and/or the liquid water content in the sealed cooking chamber (20).

13. A cooking method according to claim 12, further comprising:
- adjusting the status of the steam introduced into the cooking chamber (20) by a heating element (31, 34, 131) in the steam supplying unit (30, 130).

## Patentansprüche

1. Druckkochvorrichtung (10, 100), umfassend:
eine abgedichtete Kochkammer (20), die angeordnet ist, Nahrungsmittel (80) in einer unter Druck stehenden Umgebung aufzunehmen, wobei die abgedichtete Kochkammer (20) einen Dichtungsdeckel (21) zum Abdichten eines inneren Kochraums in der abgedichteten Kochkammer (20) aufweist und erlaubt, dass sich darin ein Druck aufbaut;
eine Dampfzuleitungseinheit (30, 130), die angeordnet ist, der abgedichteten Kochkammer (20) Dampf zuzuleiten; und
einen Dampfkanal (40), der angeordnet ist, die Dampfzuleitungseinheit (30, 130) und die abgedichtete Kochkammer (20) zu verbinden;
**dadurch gekennzeichnet, dass** die Druckkochvorrichtung (10, 100) weiter umfasst
eine Heizeinrichtung (51), die ausgebildet ist, die abgedichtete Kochkammer (20) zu erwärmen,
ein Kühlelement (52), das ausgebildet ist, die abgedichtete Kochkammer (20) abzukühlen, und
eine Steuereinheit (11, 111), die ausgebildet ist, den Kochprozess, enthaltend Erwärmen und Kühlen der abgedichteten Kochkammer (20), basierend auf dem flüssigen Wassergehalt und/oder der Feuchtigkeit in der abgedichteten Kochkammer (20) zu steuern.

2. Druckkochvorrichtung (10, 100) nach Anspruch 1, wobei das Kühlelement (52) einen Wasserfüller umfasst, der ausgebildet ist, flüssiges Wasser unter der Steuerung der Steuereinheit (11) basierend auf dem flüssigen Wassergehalt und/oder der Feuchtigkeit in der abgedichteten Kochkammer (20) in die abgedichtete Kochkammer (20) zu füllen.

3. Druckkochvorrichtung (10, 100) nach Anspruch 1, wobei die Dampfzuleitungseinheit (30, 130) ein Heizelement (31, 34, 131) umfasst, das ausgebildet ist, den Status des Dampfes, der in die Kochkammer (20) eingeleitet wird, unter der Steuerung der Steuereinheit (11) basierend auf dem flüssigen Wassergehalt und/oder der Feuchtigkeit in der abgedichteten Kochkammer (20) einzustellen.

4. Druckkochvorrichtung (10, 100) nach Anspruch 1, die weiter einen Ableitungskanal (152) umfasst, der ausgebildet ist, das angesammelte flüssige Wasser unter der Steuerung der Steuereinheit (11) basierend auf dem flüssigen Wassergehalt in der abgedichteten Kochkammer (20) abzuleiten.

5. Druckkochvorrichtung (10, 100) nach Anspruch 4, wobei ein Zwischenspeicherraum (153) in dem Ableitungskanal (152) angeordnet ist.

6. Druckkochvorrichtung (10, 100) nach Anspruch 1, wobei die Temperatur in der abgedichteten Kochkammer (20) über der Taupunkttemperatur des darin enthaltenen Dampfes eingestellt ist.

7. Druckkochvorrichtung (10, 100) nach Anspruch 1, die weiter eine Erfassungseinheit (16, 17, 117) umfasst, die ausgebildet ist, die Menge an flüssigen Wasser und/oder die Feuchtigkeit in der abgedichteten Kochkammer (20) anzugeben.

8. Druckkochvorrichtung (10, 100) nach Anspruch 1, wobei die Dampfzuleitungseinheit (30, 130) eine Verbindung (135) zu einer unabhängigen Dampfquelle oder einem Dampferzeugungselement umfasst.

9. Druckkochvorrichtung (10, 100) nach Anspruch 1, die weiter ein Ventil (41) umfasst, das im Dampfkanal (40) zum Steuern der Zuleitung von Dampf angeordnet ist.

10. Druckkochvorrichtung (10, 100) nach Anspruch 9, wobei die Dampfzuleitungseinheit (30, 130) angeordnet ist, Dampf vor Kochen vorzuwärmen.

11. Druckkochvorrichtung (10, 100) nach Anspruch 1, weiter umfassend:
eine zweite abgedichtete Kochkammer, die ausgebildet ist, Nahrungsmittel aufzunehmen;
einen Dampfschalter, der angeordnet ist, die Zuleitung von Dampf aus der Dampfzuleitungseinheit (30, 130) zu der abgedichteten Kochkammer (20) und/oder der zweiten abgedichteten Kochkammer zu schalten.

12. Kochverfahren mit einer Druckkochvorrichtung (10, 100), umfassend eine abgedichtete Kochkammer (20), die angeordnet ist, Nahrungsmittel (80) in einer unter Druck stehenden Umgebung aufzunehmen, wobei die abgedichtete Kochkammer (20) einen Dichtungsdeckel (21) zum Abdichten eines inneren Kochraums in der abgedichteten Kochkammer (20) aufweist und erlaubt, dass sich darin ein Druck aufbaut; eine Dampfzuleitungseinheit (30, 130), die angeordnet ist, der abgedichteten Kochkammer (20) Dampf zuzuleiten; und einen Dampfkanal (40), der angeordnet ist, die Dampfzuleitungseinheit (30, 130) und die abgedichtete Kochkammer (20) zu verbinden;
das Kochverfahren umfassend:
- Zuleiten (40) von Dampf aus der Dampfzuleitungseinheit (30, 130) zur abgedichteten Kochkammer (20); und
- Erfassen (16, 17, 117) der Feuchtigkeit und/oder des flüssigen Wassergehalts in der abgedichteten Kochkammer (20);
**dadurch gekennzeichnet, dass** das Kochverfahren weiter umfasst:
- Steuern (11, 111) des Kochprozesses, enthaltend Erwärmen und Kühlen der abgedichteten Kochkammer (20), basierend auf der Feuchtigkeit und/oder dem flüssigen Wassergehalt in der abgedichteten Kochkammer (20).

13. Kochverfahren nach Anspruch 12, weiter umfassend:
- Einstellen des Status des Dampfes, der in die Kochkammer (20) eingeleitet wird, durch ein Heizelement (31, 34, 131) in der Dampfzuleitungseinheit (30, 130).

## Revendications

1. Appareil de cuisson sous pression (10, 100) comprenant :
une chambre de cuisson scellée (20) agencée pour recevoir des produits alimentaires (80) dans un environnement sous pression, la chambre de cuisson scellée (20) ayant un couvercle étanche (21) pour étancher un espace de cuisson interne dans la chambre de cuisson scellée (20) et permettre d'y établir une pression à l'intérieur ;
une unité d'alimentation en vapeur (30, 130) agencée pour fournir de la vapeur à la chambre de cuisson scellée (20) ; et
un canal à vapeur (40) agencé pour interconnecter l'unité d'alimentation en vapeur (30, 130) et la chambre de cuisson scellée (20) ;
**caractérisé en ce que** l'appareil de cuisson sous pression (10, 100) comprend en outre :
un dispositif de chauffage (51) qui est à même de chauffer la chambre de cuisson scellée (20),
un élément de refroidissement (52) qui est à même de refroidir la chambre de cuisson scellée (20) et
une unité de commande (11, 111) qui est à même de commander le processus de cuisson, notamment de chauffer ou de refroidir la chambre de cuisson scellée (20) sur la base de la teneur en eau liquide et/ou de l'humidité dans la chambre de cuisson scellée (20).

2. Appareil de cuisson sous pression (10, 100) selon la revendication 1, dans lequel l'élément de refroidissement (52) comprend un dispositif de remplissage d'eau qui est à même de remplir en eau liquide la chambre de cuisson scellée (20) sous le contrôle de l'unité de commande (11) sur la base de la teneur en eau liquide et/ou de l'humidité dans la chambre de cuisson scellée (20).

3. Appareil de cuisson sous pression (10, 100) selon la revendication 1, dans lequel l'unité d'alimentation en vapeur (30, 130) comprend un élément de chauffage (31, 34, 131) qui est à même d'ajuster l'état de la vapeur introduite dans la chambre de cuisson (20) sous le contrôle de l'unité de commande (11) sur la base de la teneur en eau liquide et/ou de l'humidité dans la chambre de cuisson scellée (20).

4. Appareil de cuisson sous pression (10, 100) selon la revendication 1, qui comprend en outre un canal de drainage (152) qui est à même d'évacuer l'eau liquide accumulée sous le contrôle de l'unité de commande (11) sur la base de la teneur en eau liquide dans la chambre de cuisson scellée (20).

5. Appareil de cuisson sous pression (10, 100) selon la revendication 4, dans lequel un espace tampon (153) est agencé dans le canal de drainage (152).

6. Appareil de cuisson sous pression (10, 100) selon la revendication 1, dans lequel la température dans la chambre de cuisson scellée (20) est réglée au-dessus de la température du point de rosée de la vapeur qui y est contenue.

7. Appareil de cuisson sous pression (10, 100) selon la revendication 1, qui comprend en outre une unité de détection (16, 17, 117) qui est à même d'indiquer la quantité d'eau liquide et/ou d'humidité dans la chambre de cuisson scellée (20).

8. Appareil de cuisson sous pression (10, 100) selon la revendication 1, dans lequel l'unité d'alimentation en vapeur (30, 130) comprend une liaison (135) avec une source de vapeur indépendante ou avec un élément de génération de vapeur.

9. Appareil de cuisson sous pression (10, 100) selon la revendication 1, qui comprend en outre une soupape (41) agencée dans le canal à vapeur (40) pour commander l'alimentation en vapeur.

10. Appareil de cuisson sous pression (10, 100) selon la revendication 9, dans lequel l'unité d'alimentation en vapeur (30, 130) est agencée pour préchauffer la vapeur avant cuisson.

11. Appareil de cuisson sous pression (10, 100) selon la revendication 1, comprenant en outre :
une seconde chambre de cuisson scellée qui est à même de recevoir des produits alimentaires ;
un commutateur de vapeur agencé pour commuter l'alimentation en vapeur de l'unité d'alimentation en vapeur (30, 130) à la chambre de cuisson scellée (20) et/ou à la seconde chambre de cuisson scellée.

12. Procédé de cuisson avec un appareil de cuisson sous pression (10, 100) comprenant une chambre de cuisson scellée (20) agencée pour recevoir des produits alimentaires (80) dans un environnement sous pression, la chambre de cuisson scellée (20) ayant un couvercle étanche (21) pour étancher un espace de cuisson interne dans la chambre de cuisson scellée (20) et permettre d'y établir une pression à l'intérieur ; une unité d'alimentation en vapeur (30, 130) agencée pour alimenter en vapeur la chambre de cuisson scellée (20) ; et un canal à vapeur (40) agencée pour interconnecter l'unité d'alimentation en vapeur (30, 130) et la chambre de cuisson scellée (20) ;
le procédé de cuisson comprenant :
- l'alimentation (40) en vapeur de l'unité d'alimentation en vapeur (30, 130) à la chambre de cuisson scellée (20) ; et
- la détection (16, 17, 117) de l'humidité et/ou de la teneur en eau liquide dans la chambre de cuisson scellée (20) ;
**caractérisé en ce que** le procédé de cuisson comprend en outre :
la commande (11, 111) du processus de cuisson, notamment le chauffage ou le refroidissement de la chambre de cuisson scellée (20) sur la base de l'humidité et/ou de la teneur en eau liquide dans la chambre de cuisson scellée (20).

13. Procédé de cuisson selon la revendication 12, comprenant en outre :
- l'ajustement de l'état de la vapeur introduite dans la chambre de cuisson (20) par un élément de chauffage (31, 34, 131) dans l'unité d'alimentation en vapeur (30, 130).
